# EUROPEAN PATENT APPLICATION

(11) **EP 4 295 724 A1**
(43) Date of publication of application: **27.12.2023**
(21) Application number: 22181096.3
(22) Date of filing: 24.06.2022
(51) Int. Cl.: A45D 20/00, A45D 20/12, B01D 53/26

(54) **DRYING DISICCANT MATERIAL OF A DEHUMIDIFYING UNIT**

(71) Applicant: Koninklijke Philips N.V., 5656 AG Eindhoven (NL)
(72) Inventor: PANG, Chuen Yu Cyrus, Eindhoven (NL)
(74) Representative: Philips Intellectual Property & Standards

(57) **Abstract**

In an appliance which is configured to blow air, a dehumidifying unit (50) is used to ensure that the air which is let out of the appliance is dry air. This is especially advantageous when the air is used for a drying purpose, such as for drying hair. The dehumidifying unit (50) is configured to allow an airflow to pass through and to dehumidify the airflow, wherein the dehumidifying unit (50) comprises a desiccant material (56) and a heater (51), wherein the heater (51) has a wall structure (52) including at least one compartment (55), and wherein the desiccant material (56) is located in at least one such compartment (55). Advantageously, the heater (51) of the dehumidifying unit (50) is activated for a limited time period each time after the appliance has been operated in a state for outputting an airflow.

## Description

### FIELD OF THE INVENTION

The invention relates to a dehumidifying unit for use in an appliance comprising a housing and an airflow generating unit configured to generate an airflow from an air inlet area of the housing to an air outlet area of the housing, wherein the dehumidifying unit is configured to allow an airflow to pass through and to dehumidify the airflow, and wherein the dehumidifying unit comprises a desiccant material and a heater.

### BACKGROUND OF THE INVENTION

A practical example of an appliance comprising a housing and an airflow generating unit configured to generate an airflow from an air inlet area of the housing to an air outlet area of the housing is a hair dryer. Generally speaking, the purpose of a hair dryer is to put hair from a wet/damp condition to a dry condition. The lower the humidity level of the air, the shorter the time necessary to put the hair to the dry condition. In view thereof, it is advantageous if a blow dryer is equipped with a dehumidifying unit.

JPH05228012 A discloses a hair dryer configured to blow air at low humidity to the hair, so that the hair drying process may be effective. The known hair dryer comprises an impeller provided with a regeneration heater at the center thereof, a plurality of blades arranged on the outer periphery of the impeller, a drying air passage, a regeneration air passage, a drying heater provided at a discharge port of the drying air passage, a switching plate for switching between the drying air passage and the regeneration air passage, and a switch. A dehumidifying agent such as silica gel is supported on the blades arranged on the outer periphery of the impeller to absorb moisture from the air.

By means of the switch, three states of the hair dryer can be set, namely power off, drying, and regeneration. In the drying state of the hair dryer, the switching plate is at a position for directing an airflow invoked by the impeller to the drying air passage while closing the regeneration air passage to the airflow. In the regeneration state of the hair dryer, the switching plate is at a position for directing an airflow invoked by the impeller to the regeneration air passage while closing the drying air passage to the airflow.

When a user of the hair dryer wishes to dry her/his hair by means of the hair dryer, she/he operates the switch to set the drying state of the hair dryer. The impeller is rotated, as a result of which air is sucked in and is made to pass through the silica gel carried on the blades. The silica gel absorbs moisture from the air so that the air is dehumidified. The dehumidified air is pushed by the blades and moves to the outer periphery of the impeller under the influence of centrifugal forces following from the rotation of the impeller. Further, the dehumidified air flows along the drying air passage and is heated by the drying heater to a relatively low temperature that is safe for the hair. Eventually, the dehumidified air is discharged from the discharge port of the drying air passage.

The silica gel is almost colorless in a dry state, but as the silica gel absorbs the moisture from the air, the silica gel gradually becomes blue and red. The user may inspect the color of the silica gel on the blades of the impeller through notches which are present in the hair dryer for introducing air to the impeller, and thereby determine the hygroscopic state of the silica gel at a glance. When the user sees that the color of the silica gel is blue or even red, she/he should put the hair dryer to the regeneration state by means of the switch. As mentioned earlier, in the regeneration state of the hair dryer, the switching plate is at a position for directing an airflow invoked by the impeller to the regeneration air passage while closing the drying air passage to the airflow. Further, the impeller is made to rotate, and the regeneration heater is powered to realize a high temperature on the central axis of the impeller. As a result, moisture absorbed by the silica gel evaporates. Under the influence of the rotating impeller, the air carrying the evaporated moisture is directed away from the impeller, is made to flow through the regeneration air passage, and is eventually discharged from a discharge port of the regeneration air passage. As a result of the regeneration process during which the impeller is rotated and the regeneration heater is operated, the silica gel is restored to the dry state and is ready to efficiently absorb moisture from air in a next drying process.

A disadvantage of the hair dryer known from JPH05228012 A is that the effectiveness of the drying process depends on an action by the user, namely an action of inspecting the color of the silica gel and operating the hair dryer in the regeneration state if appropriate, as explained. Another disadvantage is that the regeneration heater needs to generate a large amount of heat in order to put the silica gel as present at the blades of the impeller to a temperature which is high enough for causing the moisture contained in the silica gel to evaporate.

It is an object of the invention to provide a dehumidifying unit which is of such a design that the dehumidifying unit can be compact and robust, and that the desiccant material can be regenerated effectively at relatively low temperatures, without necessarily being dependent on the action of a user to initiate a regeneration process.

### SUMMARY OF THE INVENTION

The invention provides a dehumidifying unit for use in an appliance comprising a housing and an airflow generating unit configured to generate an airflow from an air inlet area of the housing to an air outlet area of the housing, wherein the dehumidifying unit is configured to allow an airflow to pass through and to dehumidify the airflow, wherein the dehumidifying unit comprises a desiccant material and a heater, wherein the heater has a wall structure including at least one compartment, and wherein the desiccant material is located in at least one such compartment.

It follows from the above definition that in the dehumidifying unit according to the invention, the heater has a double functionality, namely a primary functionality of heating and a secondary functionality of accommodating the desiccant material. Advantages of the specific design of the wall structure of the heater with the at least one compartment involve the possibility for the dehumidifying unit to be compact and robust, which is very much desirable in a handheld appliance such as a hair dryer, and close arrangement of the heater and the desiccant material so that heat generated by the heater can be transferred to the desiccant material in a most efficient fashion.

According to a practical option existing in the context of the invention, the wall structure of the heater includes at least two compartments. In that case, it may be so that the desiccant material is located in all of said at least two compartments, but that is not necessary. For example, it is possible that the wall structure of the heater comprises a grid of strips and a strip encompassing the grid of strips. Another possibility is that the wall structure of the heater has a honeycomb shape, and that cells of the honeycomb shape constitute said at least two compartments in the wall structure.

The heater may be of any suitable type. According to one feasible example, the heater comprises Positive Temperature Coefficient (PTC) material. In respect of the above-mentioned possibility of the wall structure of the heater having a honeycomb shape, it is noted that the heater may be a honeycomb PTC heater, wherein, compared to conventional designs of such a type of heater, the design of the heater might need to be adjusted to have cells which are large enough to contain the desiccant material.

It is a generally known fact that normally, a PTC heater comprises at least one piece of PTC material, and that said at least one piece of PTC material is sandwiched between a pair of electrodes connecting to a metal (silver) coating on the piece of PTC material. When a voltage is applied across the piece of PTC material, the PTC material will generate heat. In the process, the temperature is controlled on the basis of a self-regulating mechanism, because the PTC material has the property that its internal resistance increases as the temperature increases. In that way, it is achieved that the temperature is kept below a maximum which is related to the exact constitution of the PTC material.

According to another feasible example, the heater is a ceramic heater. An advantageous aspect of applying a ceramic heater is that there is no need for having electrodes on opposite sides of the heater. Instead, the ceramic heater has embedded heater tracks inside. Thus, the ceramic heater only occupies a minimum of space. For the purpose of limiting the temperature of the ceramic heater, use can be made of any suitable additional components such as an external temperature sensor and a microprocessor for controlling the temperature on the basis of input from the sensor, and a mechanical temperature-sensitive switch near the heater to cut off power supply to the heater in case the microprocessor or the electrical circuit comprising the sensor, the microprocessor and the heater malfunctions.

In a practical embodiment, the dehumidifying unit comprises two air-permeable covers, wherein at least a portion of the wall structure of the heater is sandwiched between said covers. For example, said covers comprise sheets provided with holes, wherein optionally said covers comprise plastic material such as nylon material which can withstand the heat generated by the heater during operation.

In the context of the invention, any suitable type of desiccant material can be applied. According to one out of many practical possibilities, the desiccant material is of the type comprising silica gel beads.

The invention further relates to an appliance comprising a housing, an airflow generating unit configured to generate an airflow from an air inlet area of the housing to an air outlet area of the housing, and a dehumidifying unit as defined and described here before. It may be advantageous if the dehumidifying unit is arranged near the air inlet area of the housing. Also, it may be advantageous if the dehumidifying unit is arranged to cover the entire air inlet area, and if the desiccant material is spread over the entire air inlet area, as it were, so that practically all of the incoming air may be dehumidified, indeed.

The appliance may further comprise an airflow heater arranged at a position which is downstream of the dehumidifying unit as seen in the direction from the air inlet area of the housing to the air outlet area of the housing. Said airflow heater is functional to heat the outgoing air to a desired temperature, and may be activated during operation of the appliance either as a default or depending on input provided by a user. Said airflow heater may be configured to generate a larger amount of heat than the heater of the dehumidifying unit.

Effective use of the dehumidifying unit is maintained at all times when the heater of the dehumidifying unit is automatically activated each time after the dehumidifying unit has performed a dehumidifying action on an airflow, for the purpose of drying the desiccant material so that the desiccant material is ready for a next dehumidifying action. In view thereof, it is advantageous if the above-mentioned appliance is equipped with a controller which is programmed to keep the heater of the dehumidifying unit deactivated when the appliance is put to a state for outputting an airflow, and to activate the heater of the dehumidifying unit for a limited time period when the appliance is put back to a non-operational state from the state for outputting an airflow. In the case that the appliance comprises the airflow heater mentioned in the foregoing, it may particularly be so that the controller is programmed to activate the airflow heater while keeping the heater of the dehumidifying unit deactivated when the appliance is put to a state for outputting a hot airflow, to deactivate the airflow heater when the appliance is put back to the non-operational state, and to activate the heater of the dehumidifying unit for a limited time period at that point.

A practical example of an appliance as defined and described in the foregoing is a hair dryer. In a more general sense, the appliance may be either a domestic appliance or a personal care appliance.

The above-described and other aspects of the invention will be apparent from and elucidated with reference to the following detailed description of a hair dryer comprising a dehumidifying unit and of embodiments of a dehumidifying unit.

### BRIEF DESCRIPTION OF THE DRAWINGS

The invention will now be explained in greater detail with reference to the figures, in which equal or similar parts are indicated by the same reference signs, and in which:
Fig. 1 diagrammatically shows a hair dryer according to an embodiment of the invention, comprising a dehumidifying unit;
Fig. 2 diagrammatically shows components of a dehumidifying unit according to a first embodiment of the invention; and
Fig. 3 diagrammatically shows a heater of a dehumidifying unit according to a second embodiment of the invention.

### DETAILED DESCRIPTION OF THE EMBODIMENTS

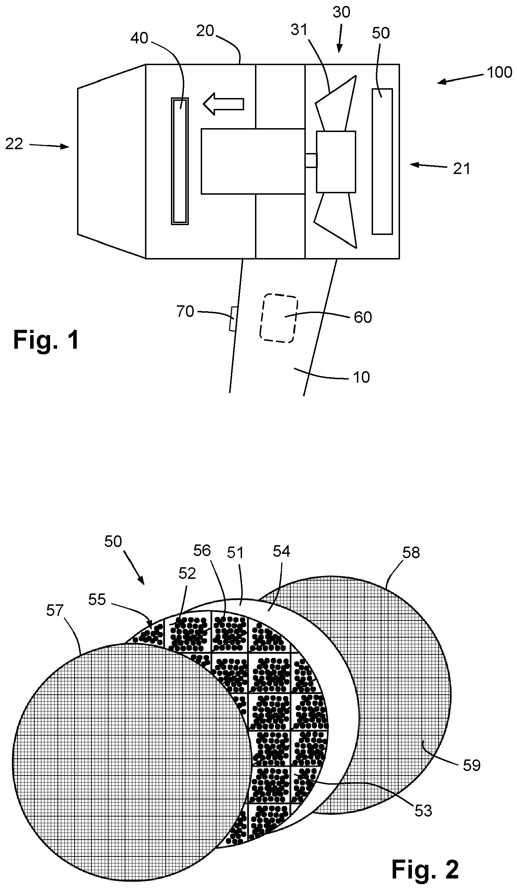

Fig. 1 shows a hair dryer 100 according to an embodiment of the invention, as an example of an appliance which is within the scope of the invention. For the sake of clarity, it is noted that Fig. 1 is of a diagrammatic nature only, showing the various components of the hair dryer 100 in a simplified fashion.

The hair dryer 100 is a handheld appliance which is intended to be applied by a user for the purpose of drying her/his hair by means of a flow of (hot) air. In the present example, the hair dryer 100 comprises the following components:
- a handle 10 for enabling the user to hold the hair dryer 100 in her/his hand;
- a housing 20 having an air inlet area 21 and an air outlet area 22, wherein it is practical if the housing 20 has a generally circular or oval periphery, and wherein it is further practical if the air inlet area 22 is provided with a plurality of relatively small holes and the air outlet area 22 is provided with a single, relatively large opening;
- an airflow generating unit 30 which is functional to generate an airflow from the air inlet area 21 of the housing 20 to the air outlet area 22 of the housing 20, comprising a rotatable impeller 31;
- an airflow heater 40 which is functional to heat an airflow in the housing 20 so that hot air blows from the hair dryer 100 during the time that the airflow heater 40 is activated, which airflow heater 40 may be a wire heater supported by a mica frame, for example;
- a dehumidifying unit 50 which is functional to dry an airflow in the housing 20 so that it is ensured that air blowing from the hair dryer 100 is dry air;
- a microcontroller 60 which is functional to control operation of the hair dryer 100;
- a switch 70 which is operable by the user for setting a state of the hair dryer 100, such as a state for blowing hot air, a state for blowing cold air, and a non-operational state.

In the present example, a practical arrangement of the dehumidifying unit 50 in the housing 20 is shown, namely an arrangement in which the dehumidifying unit 50 is positioned near the air inlet area 21 of the housing 20. In particular, in the present example, air which is drawn into the housing 20 under the influence of the rotating impeller 31 during operation of the hair dryer 100 successively passes the dehumidifying unit 50, the impeller 31, and the airflow heater 40, before exiting the housing 20. In the process, the air is dried at the position of the dehumidifying unit 50, and the air is subsequently heated at the position of the airflow heater 40 provided that the state of the hair dryer 100 set by the user involves activation of the airflow heater 40. The fact that the hair dryer 100 blows dehumidified air is advantageous when it comes to effectively performing the hair drying functionality as desired. If the dehumidifying unit 50 would be absent and the air would not be dried, a hair drying process would take longer, and this is all the more true when the hair dryer 100 is operated in a relatively wet environment such as a bathroom where the user has just taken a shower or a bath. A direction of the airflow through the housing 20 is indicated by means of an arrow in Fig. 1.

Generally speaking, the dehumidifying unit 50 comprises a desiccant material and a heater. An airflow passing the dehumidifying unit 50 is dehumidified under the influence of interaction of the air with the desiccant material. The heater serves to regenerate the desiccant material by causing evaporation of the absorbed moisture. Advantageously, the microcontroller 60 is programmed to activate the heater of the dehumidifying unit 50 for a limited time period every time a hair drying action has been performed and ended. In that way, it is ensured that at the start of every hair drying action, the moisture absorbing capacity of the desiccant material is optimal. It may be so that for the purpose of having the action of regenerating the desiccant material, the user is supposed to leave the hair dryer 100 plugged in to the mains. On the other hand, it may be so that the hair dryer 100 is equipped with a (rechargeable) battery which is capable of delivering power to such an extent that the regenerating action can be performed without connection to the mains.

Components of a dehumidifying unit 50 according to a first embodiment of the invention are shown in Fig. 2. A notable feature of this embodiment is that a wall structure 52 of the heater 51 of the dehumidifying unit 50 comprises a grid 53 of strips and a strip 54 encompassing the grid 53 of strips, which strip 54 is bent to a circular shape in the present example. In the grid 53 of strips, compartments 55 are defined, and the desiccant material 56 is present in at least a selection of those compartments, preferably all of those compartments 55 as illustrated in Fig. 2. In Fig. 2, the desiccant material 56 is depicted as a collection of beads. A practical example of the material of the heater 51 is Positive Temperature Coefficient (PTC) material, and a practical example of the desiccant material 56 is silica gel, which may be provided in beads.

The dehumidifying unit 50 according to the first embodiment of the invention further comprises two covers 57, 58 for closing the opposite sides of the heater 51 filled with the desiccant material 56. The covers 57, 58 comprise sheets provided with holes 59 so that air may pass through. It is understood that the holes 59 are sufficiently small to enable the covers 57, 58 to retain the desiccant material 56 in the respective compartments 55 in the wall structure 52 of the heater 51. A bracket or the like can be used to hold the covers 57, 58 in place on the heater 51.

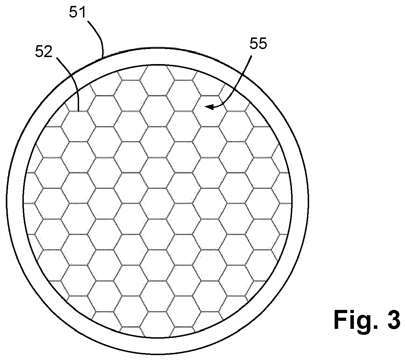

A heater 51 of a dehumidifying unit 50 according to a second embodiment of the invention is shown in Fig. 3. Apart from the design of the heater 51, the dehumidifying unit 50 according to the second embodiment of the invention may be comparable to the dehumidifying unit 50 according to the first embodiment of the invention.

The wall structure 52 of the heater 51 of the dehumidifying unit 50 according to a second embodiment of the invention has a honeycomb shape, wherein cells of the honeycomb shape constitute the compartments 55 for containing the desiccant material 56. In fact, the heater 51 is a modified honeycomb PTC heater, that is to say, a honeycomb PTC heater with enlarged cells so that the desiccant material can fit in. The invention covers the use of alternative types of heaters such as ceramic heaters, and in essence, the heater 51 can be made of any suitable type of material or any suitable combination of materials.

In both embodiments described in the foregoing, it is sufficient to operate the heater 51 at a temperature which is significantly lower than the temperature generated at the airflow heater 40 of the hair dryer 100 during operation for the purpose of removing absorbed moisture from the desiccant material 56.

It will be clear to a person skilled in the art that the scope of the invention is not limited to the examples discussed in the foregoing, and that several amendments and modifications thereof are possible without deviating from the scope of the invention as defined in the attached claims. It is intended that the invention be construed as including all such amendments and modifications insofar they come within the scope of the claims or the equivalents thereof. While the invention has been illustrated and described in detail in the figures and the description, such illustration and description are to be considered illustrative or exemplary only, and not restrictive. The invention is not limited to the disclosed embodiments. The drawings are schematic, wherein details which are not required for understanding the invention may have been omitted, and not necessarily to scale.

Variations to the disclosed embodiments can be understood and effected by a person skilled in the art in practicing the claimed invention, from a study of the figures, the description and the attached claims. In the claims, the word "comprising" does not exclude other steps or elements, and the indefinite article "a" or "an" does not exclude a plurality. Any reference signs in the claims should not be construed as limiting the scope of the invention.

Elements and aspects discussed for or in relation with a particular embodiment may be suitably combined with elements and aspects of other embodiments, unless explicitly stated otherwise. Thus, the mere fact that certain measures are recited in mutually different dependent claims does not indicate that a combination of these measures cannot be used to advantage.

The terms "comprise" and "include" as used in the present text will be understood by a person skilled in the art as covering the term "consist of'. Hence, the term "comprise" or "include" may in respect of an embodiment mean "consist of', but may in another embodiment mean "contain/have/be equipped with at least the defined species and optionally one or more other species".

For the sake of completeness, it is noted that the terms "dehumidifying" and "drying" as used in the present text are to be understood so as to have similar meaning. Further, in the present text, reference to a process of regenerating the desiccant material 56 is to be understood as reference to a process of dehumidifying the desiccant material 56.

Notable aspects of the invention are summarized as follows. In an appliance 100 which is configured to blow air, a dehumidifying unit 50 is used to ensure that the air which is let out of the appliance 100 is dry air. This is especially advantageous when the air is used for a drying purpose, such as for drying hair. The dehumidifying unit 50 is configured to allow an airflow to pass through and to dehumidify the airflow, wherein the dehumidifying unit 50 comprises a desiccant material 56 and a heater 51, wherein the heater 51 has a wall structure 52 including at least one compartment 55, and wherein the desiccant material 56 is located in at least one such compartment 55. Advantageously, the heater 51 of the dehumidifying unit 50 is activated for a limited time period each time after the appliance 100 has been operated in a state for outputting an airflow.

## Claims

1. A dehumidifying unit (50) for use in an appliance (100) comprising a housing (20) and an airflow generating unit (30) configured to generate an airflow from an air inlet area (21) of the housing (20) to an air outlet area (22) of the housing (20), wherein the dehumidifying unit (50) is configured to allow an airflow to pass through and to dehumidify the airflow, wherein the dehumidifying unit (50) comprises a desiccant material (56) and a heater (51), wherein the heater (51) has a wall structure (52) including at least one compartment (55), and wherein the desiccant material (56) is located in at least one such compartment (55).

2. The dehumidifying unit (50) as claimed in claim 1, wherein the wall structure (52) of the heater (51) includes at least two compartments (55), and wherein the desiccant material (56) is located in at least one of said at least two compartments (55).

3. The dehumidifying unit (50) as claimed in claim 2, wherein the desiccant material (56) is located in all of said at least two compartments (55).

4. The dehumidifying unit (50) as claimed in claim 2 or 3, wherein the wall structure (52) of the heater (51) comprises a grid (53) of strips and a strip (54) encompassing the grid (53) of strips.

5. The dehumidifying unit (50) as claimed in claim 2 or 3, wherein the wall structure (52) of the heater (51) has a honeycomb shape, and wherein cells of the honeycomb shape constitute said at least two compartments (55) in the wall structure (52).

6. The dehumidifying unit (50) as claimed in any of claims 1-5, wherein the heater (51) is a Positive Temperature Coefficient (PTC) heater or a ceramic heater having embedded heater tracks inside.

7. The dehumidifying unit (50) as claimed in any of claims 1-6, comprising two air-permeable covers (57, 58), wherein at least a portion of the wall structure (52) of the heater (51) is sandwiched between said covers (57, 58).

8. The dehumidifying unit (50) as claimed in claim 7, wherein said covers (57, 58) comprise sheets provided with holes (59).

9. The dehumidifying unit (50) as claimed in claim 7 or 8, wherein said covers (57, 58) comprise plastic material.

10. The dehumidifying unit (50) as claimed in any of claims 1-9, wherein the desiccant material (56) comprises silica gel beads.

11. An appliance (100) comprising a housing (20), an airflow generating unit (30) configured to generate an airflow from an air inlet area (21) of the housing (20) to an air outlet area (22) of the housing (20), and a dehumidifying unit (50) as claimed in any of claims 1-10.

12. The appliance (100) as claimed in claim 11, comprising an airflow heater (40) arranged at a position which is downstream of the dehumidifying unit (50) as seen in the direction from the air inlet area (21) of the housing (20) to the air outlet area (22) of the housing (20).

13. The appliance (100) as claimed in claim 11 or 12, comprising a controller (60) programmed to keep the heater (51) of the dehumidifying unit (50) deactivated when the appliance (100) is put to a state for outputting an airflow, and to activate the heater (51) of the dehumidifying unit (50) for a limited time period when the appliance (100) is put back to a non-operational state from the state for outputting an airflow.

14. The appliance (100) as claimed in any of claims 11-13, being either a domestic appliance or a personal care appliance.

15. The appliance (100) as claimed in claim 14, being a hair dryer.
